# FASCICULE DE BREVET EUROPEEN

(11) **EP 3 882 453 B1**
(45) Date de publication et mention de la délivrance du brevet: **27.04.2022**
(21) Numéro de dépôt: 21162153.7
(22) Date de dépôt: 11.03.2021
(51) Int. Cl.: F02K 1/72

(54) **TURBOREACTEUR DOUBLE FLUX COMPORTANT UNE SERIE DE LAMES ROTATIVES POUR OBTURER LA VEINE DU FLUX SECONDAIRE ET DEVIER LE FLUX D'AIR**
ZWEIFLUTIGER TURBOREAKTOR MIT EINER REIHE DREHBLÄTTERN, UM DEN SEKUNDÄRDURCHFLUSSKANAL ZU SCHLIESSEN UND DEN LUFTDURCHFLUSS UMZULEITEN
DOUBLE-FLOW TURBOREACTOR CONTAINING A SERIES OF ROTATING BLADES TO CLOSE THE SECONDARY FLOW CHANNEL AND BYPASS THE AIR FLOW

(30) Priorité: 16.03.2020 FR 2002535
(43) Date de publication de la demande: 22.09.2021
(73) Titulaire: AIRBUS OPERATIONS (S.A.S.), 31060 Toulouse (FR)
(72) Inventeur: GARDES, Pascal, 31060 TOULOUSE Cedex 9 (FR); MENOU, Fabien, 31060 TOULOUSE Cedex 9 (FR); GOUGEON, Pascal, 31060 TOULOUSE Cedex 9 (FR); VANDERBAUWEDE, Simon, 31060 TOULOUSE Cedex 9 (FR)
(74) Mandataire: Sarraméa, Claude

(56) Documents cités:
- EP-A1- 3 540 203
- US-A- 2 933 890
- US-A- 4 026 105
- US-A- 4 030 290

## Description

La présente invention concerne un turboréacteur double flux qui comporte une série de lames qui sont montées rotatives pour obturer la veine du flux secondaire et où chaque lame présente une forme permettant de dévier le flux d'air vers l'avant du turboréacteur, ainsi qu'un aéronef comportant au moins un tel turboréacteur double flux.

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur et une nacelle qui est fixée autour du moteur. Le turboréacteur double flux présente entre la nacelle et le moteur, une veine secondaire dans laquelle circule un flux secondaire.

Dans la demande de brevet FR-A-3 078 999, la nacelle comporte en outre une série de lames qui sont montées rotatives pour obturer la veine secondaire et diriger le flux d'air de ladite veine secondaire vers l'extérieur à travers des cascades disposées en travers d'une fenêtre.

Si un tel agencement donne de bons résultats en ce qui concerne le poids du mécanisme, il est nécessaire de prévoir des cascades pour diriger le flux d'air sortant de la fenêtre ce qui engendre un poids supplémentaire et il est donc nécessaire de trouver un arrangement qui permet de diriger au mieux le flux d'air sortant de la fenêtre tout en permettant un gain de poids.

Un objet de la présente invention est de proposer un turboréacteur double flux qui comporte une série de lames qui sont montées rotatives pour obturer la veine du flux secondaire et où chaque lame présente une forme permettant de dévier le flux d'air vers l'avant.

A cet effet, est proposé un turboréacteur double flux tel que revendiqué à la revendication 1.

L'invention propose également un aéronef comportant au moins un tel turboréacteur double flux.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- La figure 1 est une vue de côté d'un aéronef comportant un turboréacteur double flux selon l'invention,
- La figure 2 est une vue de côté et schématisée d'un turboréacteur selon l'invention en position escamotée des lames,
- La figure 3 est une vue similaire à la vue de la figure 2 avec les lames en position déployée,
- La figure 4 est une vue en perspective d'une lame selon l'invention en position déployée,
- La figure 5 est une vue de face de lames en position escamotée, et
- La figure 6 est une vue de face de lames en position déployée.

Dans la description qui suit, les termes relatifs à une position sont pris en référence au sens d'avancement de l'aéronef et l'air dans un turboréacteur s'écoule donc de l'avant vers l'arrière de l'aéronef.

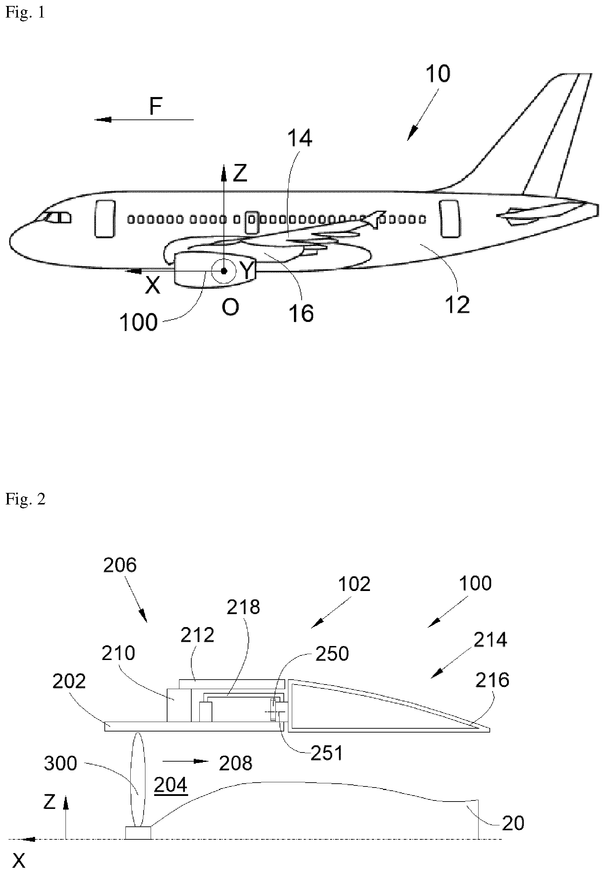

En référence avec la figure 1, un aéronef 10 comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16. La flèche F de la figure 1 montre la direction d'avancement de l'aéronef 10 et l'air s'écoule donc dans le sens inverse dans le turboréacteur double flux 100.

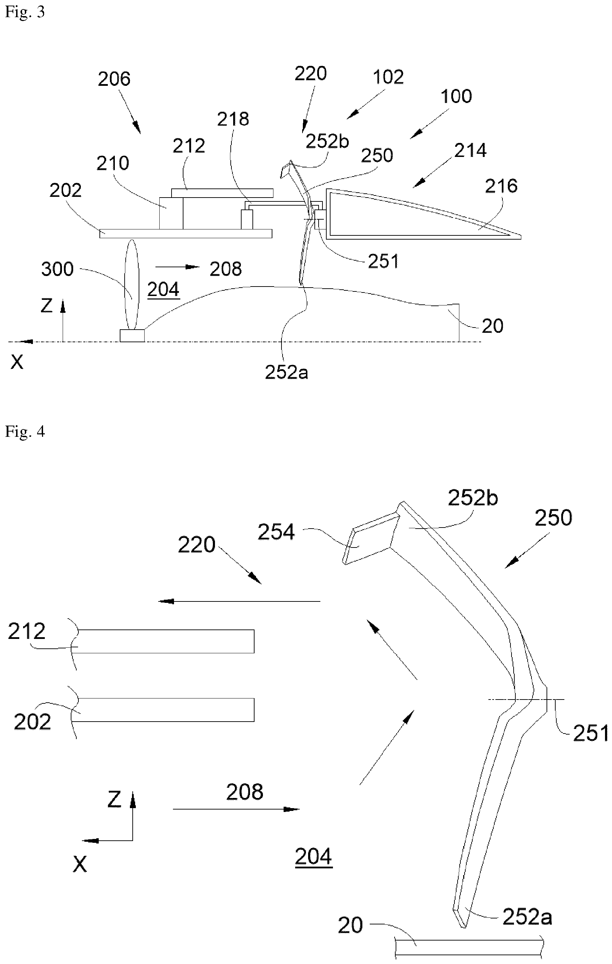

Les figures 2 et 3 montrent le turboréacteur double flux 100 qui présente une nacelle 102 et un moteur 20 qui est logé à l'intérieur de la nacelle 102 et qui comporte un carter de soufflante 202.

Dans la description qui suit, et par convention, on appelle X l'axe longitudinal du turboréacteur double flux 100 qui est parallèle à l'axe longitudinal de l'aéronef 10 orienté positivement vers l'avant de l'aéronef 10, on appelle Y l'axe transversal qui est horizontal lorsque l'aéronef est au sol, et Z l'axe vertical, ces trois directions X, Y et Z étant orthogonales entre elles.

Le turboréacteur double flux 100 présente entre la nacelle 102 et le moteur 20, une veine 204 dans laquelle circule un flux secondaire 208 provenant d'une entrée d'air du turboréacteur double flux 100 à travers une soufflante 300 et qui s'écoule donc selon un sens d'écoulement qui va de l'avant vers l'arrière du turboréacteur double flux 100. La soufflante 300 est disposée à l'intérieur du carter de soufflante 202.

La nacelle 102 présente une structure fixe 206 qui est montée fixe sur le carter de soufflante 202. La structure fixe 206 est composée en particulier d'un cadre avant 210 monté autour du carter de soufflante 202 et de panneaux extérieurs 212 autour du carter de soufflante 202.

La nacelle 102 présente un ensemble mobile 214 qui présente un capot mobile 216 formant les parois de la tuyère et un coulisseau 218 qui prend par exemple la forme d'un cylindre à parois ajourées. Le capot mobile 216 est fixé au et en arrière du coulisseau 218.

Le coulisseau 218 est monté mobile en translation selon une direction de translation globalement parallèle à l'axe longitudinal X sur la structure fixe 206 de la nacelle 102.

Le coulisseau 218 est mobile entre une position avancée (figure 2) et une position reculée (figure 3) et inversement. En position avancée, le coulisseau 218 est positionné le plus en avant de manière à ce que le capot mobile 216 soit rapproché des panneaux extérieurs 212 et du carter de soufflante 202. En position reculée, le coulisseau 218 est positionné le plus en arrière possible de manière à ce que le capot mobile 216 soit éloigné vers l'arrière des panneaux extérieurs 212 et du carter de soufflante 202 de manière à définir entre eux une fenêtre 220.

En position avancée, le capot mobile 216 et les panneaux extérieurs 212 se prolongent de manière à définir la surface extérieure de la nacelle 102, et le capot mobile 216 et le carter de soufflante 202 se prolongent de manière à définir la surface extérieure de la veine 204.

En position reculée, le capot mobile 216 et le carter de soufflante 202 ainsi que les panneaux extérieurs 212 sont à distance et définissent entre eux la fenêtre 220 qui est ouverte entre la veine 204 et l'extérieur de la nacelle 102. C'est-à-dire que l'air provenant du flux secondaire 208 traverse la fenêtre 220 pour rejoindre l'extérieur du turboréacteur double flux 100.

La translation du coulisseau 218 est réalisée par tous moyens appropriés, comme par exemple, des systèmes de glissières entre le cadre avant 210 et le coulisseau 218.

L'entraînement en translation du coulisseau 218 est assuré par tous moyens appropriés comme par exemple des actionneurs commandés par une unité de contrôle, par exemple du type processeur, qui commande les déplacements dans un sens ou dans l'autre selon les besoins de l'aéronef 10. Chaque actionneur est par exemple un vérin à double effet (deux directions de travail) fixé entre la structure fixe 206 et le coulisseau 218.

La translation et l'entraînement en translation sont ainsi réalisés par tout ensemble d'entraînement approprié.

Le carter de soufflante 202 et les panneaux extérieurs 212 délimitent l'avant de la fenêtre 220 et le capot mobile 216 délimite l'arrière de la fenêtre 220.

La nacelle 102 comporte une pluralité de lames 250, chacune étant montée mobile en rotation sur le coulisseau 218 autour d'un axe de rotation 251 globalement parallèle à l'axe longitudinal X.

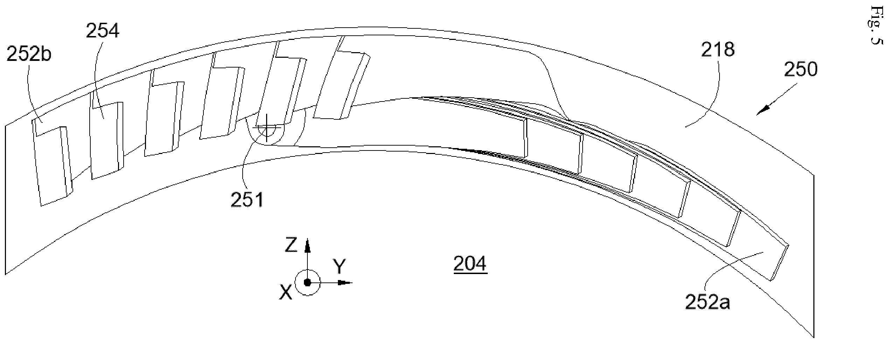

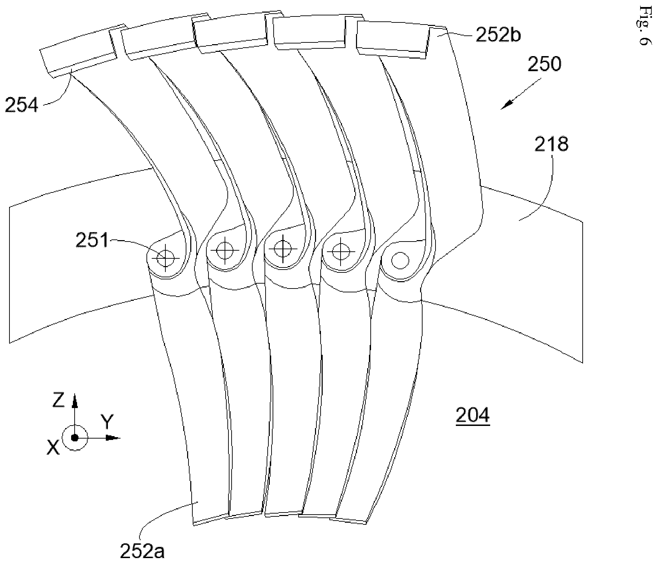

La figure 4 montre une lame 250 selon l'invention, et les figures 5 et 6 montrent des lames selon deux positions d'utilisation.

Chaque lame 250 s'étend de part et d'autre de son axe de rotation 251 avec un premier bras 252a et un deuxième bras 252b qui s'étend à l'opposé du premier bras 252a.

Chaque lame 250 est ainsi mobile en rotation entre une position escamotée (figures 2 et 5) et une position déployée (figures 3, 4 et 6).

En position escamotée, le premier bras 252a est en dehors de la veine 204 et le deuxième bras 252b est escamoté à l'intérieur de la nacelle 102.

En position déployée, le premier bras 252a est en travers de la veine 204 afin de dévier le flux secondaire 208 vers la fenêtre 220 et le deuxième bras 252b se projette en dehors de la nacelle 102 pour guider le flux d'air secondaire 208 vers l'extérieur. Ainsi, en position déployée, le premier bras 252a se rapproche du moteur 20 afin d'obturer au mieux la veine 204 et l'extrémité libre du deuxième bras 252b sort de la nacelle 102 à travers la fenêtre 220.

Chaque lame 250 est montée ici sur un pourtour du coulisseau 218. Lorsque les lames 250 sont en position escamotée, elles se superposent selon l'axe longitudinal X, les unes au-dessus des autres de manière à s'aligner sous une forme globalement circulaire comme représenté sur la figure 5 où seules quelques lames 250 ont été représentées.

Le nombre de lames 250 dépend des dimensions du turboréacteur double flux 100 afin qu'en position déployée, les lames 250 obturent la plus grande partie de la veine 204.

Le déplacement en rotation de chaque lame 250 de la position escamotée à la position déployée et inversement est assuré par tous systèmes de manœuvre appropriés. Il peut s'agir par exemple d'un système de manœuvre porté par le coulisseau 218 et destiné à déplacer chaque lame 250 de la position escamotée à la position déployée et inversement. Le système de manœuvre est commandé par l'unité de contrôle. Le système de manœuvre peut être par exemple un système motorisé de pignon et crémaillère comme celui décrit dans le document FR-A-3 078 999 ou tout autre système mécanique approprié.

Le passage de la position escamotée à la position déployée s'effectue ainsi par une rotation de la lame 250 de manière à déplacer le premier bras 252a vers l'intérieur du turboréacteur 100 et le deuxième bras 252b vers l'extérieur de la nacelle 102.

La position escamotée peut être adoptée lorsque le coulisseau 218 est en position avancée ou en position reculée. La position déployée ne peut être adoptée que lorsque le coulisseau 218 est en position reculée.

Le fonctionnement consiste ainsi, à partir de la position avancée/escamotée, à commander le déplacement du coulisseau 218 de la position avancée à la position reculée, puis à commander le système de manœuvre afin de déplacer chaque lame 250 de la position escamotée à la position déployée.

A l'inverse, le fonctionnement consiste ainsi, à partir de la position reculée/déployée, à commander le système de manœuvre afin de déplacer chaque lame 250 de la position déployée à la position escamotée, puis à commander le déplacement du coulisseau 218 de la position reculée à la position avancée.

La présence du deuxième bras 252b qui s'étend à travers la fenêtre 220 jusqu'à l'extérieur de la nacelle 102 permet de faire l'économie de cascades et donc d'alléger l'ensemble.

Afin de guider au mieux le flux d'air secondaire 208, le premier bras 252a s'étend de l'avant vers l'arrière en progressant de son extrémité libre vers son axe de rotation 251 et le deuxième bras 252b s'étend de l'arrière vers l'avant en progressant de son axe de rotation 251 vers son extrémité libre. Comme le montre la figure 4, une telle forme permet d'assurer un changement de direction progressif du flux d'air secondaire 202.

Pour contraindre encore plus le flux d'air secondaire 208 vers l'avant en sortie de la nacelle 102, le deuxième bras 252b comporte au niveau de son extrémité libre, un aileron 254 qui s'étend vers l'avant dans un plan globalement parallèle à l'axe longitudinal X.

L'invention a été plus particulièrement décrite dans le cas d'une nacelle sous une aile mais elle peut s'appliquer à une nacelle située à l'arrière du fuselage.

## Revendications

1. Turboréacteur double flux (100) présentant un axe longitudinal (X) et comportant un moteur (20) et une nacelle (102) entourant le moteur (20) qui comporte un carter de soufflante (202), où une veine (204) d'un flux secondaire (208) est délimitée entre la nacelle (102) et le moteur (20) et dans laquelle un flux d'air circule selon un sens d'écoulement de l'avant vers l'arrière, ladite nacelle (102) comportant :
- une structure fixe (206) fixée au carter de soufflante (202),
- un ensemble mobile (214) présentant un capot mobile (216) et un coulisseau (218), le capot mobile (216) étant fixé au et en arrière du coulisseau (218), le coulisseau (218) étant mobile en translation sur la structure fixe (206) selon une direction de translation entre une position avancée dans laquelle le coulisseau (218) est positionné de manière à ce que le capot mobile (216) soit rapproché du carter de soufflante (202) et une position reculée dans laquelle le coulisseau (218) est positionné de manière à ce que le capot mobile (216) soit éloigné du carter de soufflante (202) pour définir entre eux une fenêtre (220) ouverte entre la veine (204) et l'extérieur de la nacelle (102),
- une pluralité de lames (250), chacune étant montée mobile en rotation sur le coulisseau (218) autour d'un axe de rotation (251) globalement parallèle à l'axe longitudinal (X) entre une position escamotée et une position déployée, chacune s'étendant de part et d'autre de son axe de rotation (251) avec un premier bras (252a) et un deuxième bras (252b), où en position escamotée, le premier bras (252a) est en dehors de la veine (204) et le deuxième bras (252b) est escamoté à l'intérieur de la nacelle (102), et où en position déployée le premier bras (252a) est en travers de la veine (204) et le deuxième bras (252b) se projette en dehors de la nacelle (102),
- un ensemble d'entraînement assurant le déplacement du coulisseau (218) entre la position avancée et la position reculée, et inversement, et
- un système de manœuvre destiné à déplacer chaque lame (250) de la position escamotée à la position déployée et inversement.

2. Turboréacteur double flux (100) selon la revendication 1, **caractérisé en ce que** le premier bras (252a) s'étend de l'avant vers l'arrière en progressant de son extrémité libre vers son axe de rotation (251) et **en ce que** le deuxième bras (252b) s'étend de l'arrière vers l'avant en progressant de son axe de rotation (251) vers son extrémité libre.

3. Turboréacteur double flux (100) selon la revendication 2, **caractérisé en ce que** le deuxième bras (252b) comporte au niveau de son extrémité libre, un aileron (254) qui s'étend vers l'avant dans un plan globalement parallèle à l'axe longitudinal (X).

4. Aéronef (10) comportant au moins un turboréacteur double flux (100) selon l'une des revendications précédentes.

## Patentansprüche

1. Mantelstromtriebwerk (100), welches eine Längsachse (X) aufweist und ein Kerntriebwerk (20) und eine das Kerntriebwerk (20) umgebende Gondel (102) umfasst, welche ein Gebläsegehäuse (202) umfasst, wobei ein Strömungskanal (204) eines Sekundärstroms (208) zwischen der Gondel (102) und dem Kerntriebwerk (20) begrenzt wird, in welchem ein Luftstrom in einer Strömungsrichtung von vorn nach hinten strömt, wobei die Gondel (102) umfasst:
- eine feststehende Struktur (206), die am Gebläsegehäuse (202) befestigt ist,
- eine bewegliche Anordnung (214), die eine bewegliche Haube (216) und einen Gleitblock (218) aufweist, wobei die bewegliche Haube (216) an und hinter dem Gleitblock (218) befestigt ist, wobei der Gleitblock (218) auf der feststehenden Struktur (206) in einer Translationsrichtung translatorisch beweglich ist zwischen einer vorgeschobenen Position, in welcher der Gleitblock (218) so positioniert ist, dass die bewegliche Haube (216) an das Gebläsegehäuse (202) angenähert ist, und einer zurückgezogenen Position, in welcher der Gleitblock (218) so positioniert ist, dass die bewegliche Haube (216) von dem Gebläsegehäuse (202) entfernt ist, um zwischen ihnen ein offenes Fenster (220) zwischen dem Strömungskanal (204) und der Außenseite der Gondel (102) zu definieren,
- mehrere Lamellen (250), die jeweils an dem Gleitblock (218) drehbeweglich um eine im Wesentlichen zur Längsachse (X) parallele Drehachse (251) zwischen einer eingeklappten Position und einer ausgeklappten Position angebracht sind und die sich jeweils beiderseits ihrer Drehachse (251) mit einem ersten Arm (252a) und einem zweiten Arm (252b) erstrecken, wobei in der eingeklappten Position der erste Arm (252a) sich außerhalb des Strömungskanals (204) befindet und der zweite Arm (252b) ins Innere der Gondel (102) eingeklappt ist und wobei in der ausgeklappten Position der erste Arm (252a) quer zum Strömungskanal (204) angeordnet ist und der zweite Arm (252b) aus der Gondel (102) herausragt,
- eine Antriebsanordnung, welche die Verlagerung des Gleitblocks (218) zwischen der vorgeschobenen Position und der zurückgezogenen Position und umgekehrt sicherstellt, und
- ein Betätigungssystem, das dazu bestimmt ist, jede Lamelle (250) aus der eingeklappten Position in die ausgeklappte Position und umgekehrt zu verlagern.

2. Mantelstromtriebwerk (100) nach Anspruch 1, **dadurch gekennzeichnet, dass** sich der erste Arm (252a) von vorn nach hinten erstreckt und dabei von seinem freien Ende in Richtung seiner Drehachse (251) verläuft, und dadurch, dass sich der zweite Arm (252b) von hinten nach vorn erstreckt und dabei von seiner Drehachse (251) in Richtung seines freien Endes verläuft.

3. Mantelstromtriebwerk (100) nach Anspruch 2, **dadurch gekennzeichnet, dass** der zweite Arm (252b) an seinem freien Ende eine Finne (254) umfasst, welche sich in einer im Wesentlichen zur Längsachse (X) parallelen Ebene nach vorn erstreckt.

4. Luftfahrzeug (10), welches mindestens ein Mantelstromtriebwerk (100) nach einem der vorhergehenden Ansprüche umfasst.

## Claims

1. Turbofan engine (100) having a longitudinal axis (X) and comprising a motor (20) and a nacelle (102), surrounding the motor (20), which comprises a fan casing (202), in which a duct (204) for a bypass flow (208) is delimited between the nacelle (102) and the motor (20) and in which a flow of air flows in a flow direction from front to rear, said nacelle (102) comprising:
- a fixed structure (206) fixed to the fan casing (202),
- a mobile assembly (214) having a mobile cowl (216) and a slider (218), the mobile cowl (216) being fixed to and aft of the slider (218), the slider (218) being mobile in translation, on the fixed structure (206), in a direction of translation between an advanced position in which the slider (218) is positioned such that the mobile cowl (216) is moved close to the fan casing (202) and a retracted position in which the slider (218) is positioned such that the mobile cowl (216) is moved away from the fan casing (202) so as to define, between them, an open window (220) between the duct (204) and the exterior of the nacelle (102),
- a plurality of blades (250), each one being mobile in rotation on the slider (218) about an axis of rotation (251) that is generally parallel to the longitudinal axis (X) between a stowed position and a deployed position, each one extending on either side of its axis of rotation (251) with a first arm (252a) and a second arm (252b), where, in the stowed position, the first arm (252a) is outside the duct (204) and the second arm (252b) is stowed inside the nacelle (102), and where, in the deployed position, the first arm (252a) is across the duct (204) and the second arm (252b) projects out of the nacelle (102),
- a drive assembly causing the slider (218) to move between the advanced position and the retracted position, and vice versa, and
- a manoeuvring system intended to move each blade (250) from the stowed position to the deployed position and vice versa.

2. Turbofan engine (100) according to Claim 1, **characterized in that** the first arm (252a) extends from front to rear progressing from its free end towards its axis of rotation (251), and **in that** the second arm (252b) extends from rear to front progressing from its axis of rotation (251) towards its free end.

3. Turbofan engine (100) according to Claim 2, **characterized in that** the second arm (252b) comprises, at its free end, an aileron (254) that extends towards the front in a plane that is generally parallel to the longitudinal axis (X).

4. Aircraft (10) comprising at least one turbofan engine (100) according to one of the preceding claims.
